# EUROPÄISCHE PATENTSCHRIFT

(11) **EP 0 917 926 B1**
(45) Veröffentlichungstag und Bekanntmachung des Hinweises auf die Patenterteilung: **18.12.2002**
(21) Anmeldenummer: 98120056.1
(22) Anmeldetag: 23.10.1998
(51) Int. Cl.: B23P 15/14, B23P 9/02, B23F 17/00

(54) **Verfahren zur Herstellung einer Innenverzahnung in einem Maschinenbauteil durch eine spanende Bearbeitung und anschliessender Kaltverfestigung von Zahngründen**
Method for manufacturing internal teeth in a machine element, by machining followed by cold strengthening of the teeth gullets
Procédé de fabrication d' une denture interne dans un élément de machine par usinage, suivie d' un renforcement à froid des fonds des dents

(30) Priorität: 21.11.1997 DE 19751639
(43) Veröffentlichungstag der Anmeldung: 26.05.1999
(73) Patentinhaber: Bayerische Motoren Werke Aktiengesellschaft, 80788 München (DE)
(72) Erfinder: Luchner, Clemens, 85598 Baldham (DE); Reichl, Horst, 84034 Landshut (DE); Kustermann, Karl-Heinz, 0043 Faerie Glen (ZA); Gäbeler, Rüdiger, 85570 Markt Schwaben (DE)

(56) Entgegenhaltungen:
- DE-A- 4 232 430
- DE-C- 806 511
- US-A- 3 276 100
- DATABASE WPI Section PQ, Week 8242 Derwent Publications Ltd., London, GB; Class P52, AN 82-N7936E XP002094562 -& SU 792 690 A (ROST MACH CONS RES) , 23. April 1982
- DATABASE WPI Section PQ, Week 9414 Derwent Publications Ltd., London, GB; Class P54, AN 94-116071 XP002094563 -& RU 2 004 388 C (TAGANROG RADIO ENG INST), 15. Dezember 1993
- DATABASE WPI Section PQ, Week 8550 Derwent Publications Ltd., London, GB; Class P54, AN 85-315596 XP002094564 -& SU 1 159 769 A (MOSC AUTOMECH INST) , 7. Juni 1985

## Beschreibung

Die Erfindung bezieht sich nach dem Oberbegriff des Patentanspruches 1 auf ein Verfahren zur Herstellung einer Innenverzahnung in einem Maschinenbauteil durch eine spanende Bearbeitung und anschließender Kaltverfestigung von Zahngründen.

Bei aufgrund ihrer relativ kleinen Abmessungen wirtschaftlich ausschließlich durch Räumen herstellbaren Innenverzahnungen ergibt sich der Nachteil, daß bei dynamischen Beanspruchungen vom Grund der Innenverzahnung Dauerschwingbrüche ausgehen. Zur Begegnung dieses Nachteiles ist es im Stand der Technik bekannt, bei einem Maschinenbauteil in einem spanabhebend erzeugten Profil den Profilgrund mittels einer Drückvorrichtung einer Kaltverfestigung zu unterziehen.

So zeigt und beschreibt die DE-PS 751 103 eine Vorrichtung zum Drücken von vorgearbeitetem Gewinde zwecks Steigerung der Dauerhaltbarkeit mittels am Kerbgrund des Gewindes angreifender Werkzeuge, wobei mehrprofilige Drückrollen mit einem gegenüber den Gewindeflankenwinkel spitzeren Profilflankenwinkel dazu dienen, das mit Kernaufmaß vorgearbeitete Gewinde in seinem Gewindegrund durch Drücken zu verdichten auf das Endmaß. Weiter zeigt und beschreibt die DE-PS 806511 ein Verfahren sowie eine Vorrichtung zur Erhöhung der Biegebelastbarkeit von Zahnrädern, wobei die Zähne in den Fußradien mittels Drückscheibenrollen einer Verfestigung durch Prägepolieren unterworfen werden. Schließlich ist aus der DE-A 195 00 078 ein Verfahren zur Verringerung des relativen Bruchmomentes im Bereich von Soll-Bruchstellen von Bauteilen, insbesondere einer Welle-Nabe-Verbindung bekannt, wobei das Bauteil im Bereich der Soll-Bruchstelle, insbesondere einer als Kerbe ausgebildeten Soll-Bruchstelle einem Kaltverformungsverfahren unterzogen wird.

Ziel jeder vorgenannten Kaltverfestigung ist es, in dem jeweiligen Bauteil die mit dem jeweiligen Profil gegebene Kerbwirkung durch Ausbildung von Druckeigenspannungen mittels Kaltverfestigung in den rißgefährdeten Stellen zu reduzieren.

Der Erfindung liegt die Aufgabe zugrunde, ein Verfahren zur Herstellung einer in den Abmessungen relativ kleinen Innenverzahnung in einem Maschinenbauteil durch eine spanende Bearbeitung und anschließender Kaltverfestigung von Zahngründen derart zu verbessern, daß in einem einzugigen Verfahren eine hochfeste Innenverzahnung erzielt ist.

Diese Aufgabe ist mit dem Patentanspruch 1 gelöst. Der Vorteil der Erfindung ist in einem in einem Zug durchführbaren Verfahren zu sehen, wobei mit diesem einzugigen Verfahren in kostengünstiger Weise eine den Profilen vorteilhaft angepaßte Verfestigung erzielt ist, die durch die Verwendung eines Kombi-Werkzeuges mit einem ersten Werkzeugabschnitt zur spanabhebenden Bearbeitung und einem zweiten, anschließend angeordneten Werkzeugabschnitt zur profilgestalteten Kaltverfestigung sämtlicher Zahngründe einer Innenverzahnung erreicht ist.

In weiterer Ausgestaltung der Erfindung kann die profilgestaltende Kaltverfestigung sämtlicher Zahngründe mittels eines Kombi-Werkzeuges erzielt sein, dessen zweiter Werkzeugabschnitt entweder zentrisch aufweitbar oder konusartig mit kleiner Steigung gestaltet ist.

Das erfindungsgemäße Verfahren findet bevorzugt Anwendung für die Herstellung einer Innenverzahnung einer Wellenkupplung aus einem Leichtmetall, insbesondere einer Alu-Legierung.

Mit dem erfindungsgemäßen Verfahren entstehen in vorteilhafter Weise nach dem Bearbeitungsvorgang in den Zahngründen durch die elastische Rückfederung des umgebenden Werkstoffes die gewünschten Druckeigenspannungen. Diese Druckeigenspannungen ergeben weiter mit der im Anspruch 1 beschriebenen Oberflächenglättung die gewünschte Festigkeitsteigerung, insbesondere eine Schwingfestigkeitssteigerung. Als weiterer Vorteil des erfindungsgemäßen Verfahrens ist zu erwähnen, daß durch den Selbstzentrierungseffekt des Kombi-Werkzeuges beim Aufweiten in allen Zahngründen eine gleichförmige Umformung erzielt wird mit über den Umfang gleichen Werkstückeigenschaften.

Die Erfindung ist im folgenden beschrieben.

Eine vorzugsweise aus einer Alu-Legierung gebildete Wellenkupplung von kleinen Außenabmessungen ist mit einer Innenverzahnung mit relativ kleinem Teilkreisdurchmesser bei relativ geringer Zähnezahl auszubilden.

Zur Herstellung der relativ grob verzahnten Innenverzahnung ist erfindungsgemäß ein Verfahren vorgeschlagen, bei dem unter Verwendung eines Kombi-Werkzeuges, bestehend aus einem ersten Werkzeugabschnitt zur spanabhebenden Bearbeitung und einem zweiten, anschließend angeordneten Werkzeugabschnitt zur profilgestalteten Kaltverfestigung sämtlicher Zahngründe der Innenverzahnung zunächst die Zahnflanken auf ihr Fertigmaß einschließlich der Zahngründe mit einem vorbestimmten Aufmaß hergestellt werden und anschließend ohne Unterbrechung die Fertigprofile jedes Zahngrundes durch im wesentlichen radial gerichtetes Verdrängen des durch das jeweilige Aufmaß von ca. 0,05 bis 0,4 mm gegebenen Materials vorzugsweise vom Mittenbereich jedes Zahngrundes zu den Fußradien benachbarter Zahnflanken erzeugt werden mit einem ohne Unterbrechung anschließenden Glätten der Oberfläche der kaltverfestigten Zahngründe.

In einer Variation des erfindungsgemäßen Verfahrens können die Fertigprofile jedes Zahngrundes durch im wesentlichen radial gerichtetes Verdrängen des Materials auch dadurch erzeugt sein, daß Material von den Fußradien-Bereichen benachbarter Zahnflanken zum Mittenbereich jedes Zahngrundes verdrängt wird unter Bildung einer niedrigen Rippe in der Mitte des Zahngrundes, wobei zumindest die Fußradien der Zahngründe anschließend an der Oberfläche geglättet werden.

Mit dem vorgenannten Kombi-Werkzeug kann das Verfahren zur Herstellung einer hochfesten Innenverzahnung in vorteilhafter Weise in einem Zug durchgeführt werden. Konkret ergibt sich damit für die Ausbildung der Innenverzahnung der Wellenkupplung im ersten Abschnitt ein Räumwerkzeug mit anschließendem zweiten Abschnitt als Drückwerkzeug zur Kaltverfestigung der Zahngründe der Innenverzahnung.

Eine baulich vorteilhaft einfache Ausgestaltung des mit dem Räumwerkzeug kombinierten Drückwerkzeuges ist dadurch erreicht, daß die zum Drücken der Zahngründe vorgesehenen Drückabschnitte im Anschluß an das Räumwerkzeug konisch bzw. keilartig ansteigend ausgebildet sind.

Das erfindungsgemäße Verfahren ist anwendbar bei geraden und schrägen Innenverzahnungen, wobei mit der Herstellung einer Innenverzahnung mit Verdichtung in den Zahngründen zur Kaltverfestigung des Werkstoffes in einem einzugigen Verfahren mittels eines Kombi-Werkzeuges eine kostengünstige und großserientaugliche Herstellung erzielt ist.

## Patentansprüche

1. Verfahren zur Herstellung einer Innenverzahnung in einem Maschinenbauteil durch eine spanende Bearbeitung und anschließender Kaltverfestigung von Zahngründen,
- wobei unter Verwendung eines Kombi-Werkzeuges, bestehend aus einem Werkzeugabschnitt zur spanabhebenden Bearbeitung und einem zweiten, anschließend angeordneten Werkzeugabschnitt zur profilgestalteten Kaltverfestigung sämtlicher Zahngründe der Innenverzahnung zunächst die Innenverzahnung mit relativ kleinem Teilkreisdurchmesser bei geringer Zähnezahl spanabhebend mittels Räumen erzeugt wird, wobei die Zahnflanken auf ihr Fertigmaß einschließlich der Zahngründe mit einem vorbestimmten Aufmaß hergestellt werden, und
- anschließend die Fertigprofile jedes Zahngrundes durch im wesentlichen radial gerichtetes Verdrängen des durch das jeweilige Aufmaß gegebenen Materials entweder vom Mittenbereich jedes Zahngrundes zu den Fußradien benachbarter Zahnflanken oder umgekehrt von den Fußradien-Bereichen benachbarter Zahnflanken zum Mittenbereich jedes Zahngrundes erzeugt werden, und
- abschließend ein Glätten der Oberfläche der kaltverfestigten Zahngründe erfolgt.

2. Verfahren nach Anspruch 1, **dadurch gekennzeichnet, daß** die profilgestaltende Kaltverfestigung sämtlicher Zahngründe mittels eines Kombi-Werkzeuges erzielt wird, dessen zweiter Werkzeugabschnitt entweder zentrisch aufweitbar oder konusartig mit kleiner Steigung gestaltet ist.

3. Verfahren nach den Ansprüchen 1 und 2, **gekennzeichnet durch** die Anwendung für eine Innenverzahnung einer Wellenkupplung aus einem Leichtmetall, insbesondere einer Alu-Legierung.

## Claims

1. A method of producing inner teeth in a machine component by metal-cutting followed by strain-hardening of tooth roots,
- wherein, using a combined tool comprising a portion for metal-cutting and a second adjoining portion for contoured strain-hardening of all roots of the internal teeth, a small number of relatively small pitch-circle inner teeth are first formed by metal-cutting by broaching, the teeth flanks being given their final dimensions including the tooth roots with predetermined overdimensioning, and
- the finished profiles of each tooth root are then made by substantially radial displacement of the overdimensioned material either from the central region of each tooth root to the foot radii of adjacent tooth flanks or conversely from the foot radii regions of neighbouring tooth flanks to the central region of each tooth root, and
- finally the surface of the strain-hardened tooth roots is smoothed.

2. A method according to claim 1, **characterised in that** the contoured strain-hardening of all tooth roots is obtained by means of a combined tool having a second portion which is either centrally expandable or is conical with a small gradient.

3. A method according to claims 1 and 2, **characterised by** application to inner teeth of a shaft coupling made of light metal, especially an aluminium alloy.

## Revendications

1. Procédé de fabrication d'une denture intérieure d'une pièce par usinage avec enlèvement de copeaux suivie d'un renforcement à froid des fonds de dents, selon lequel
- on utilise un outil combiné formé d'un premier segment d'outil pour l'usinage avec enlèvement de copeaux et d'un second segment d'outil adjacent pour renforcer à froid la forme du profil de tous les fonds de dents de la denture intérieure, en réalisant tout d'abord la denture intérieure à diamètre de cercle primitif relativement petit et un nombre réduit de dents, en procédant par usinage avec enlèvement de copeaux et dégagement de matière en réalisant les flancs de dents à leurs dimensions finales y compris les fonds de dents auxquels on laisse une surdimension déterminée, et
- ensuite on réalise les profils terminés de chaque fond de dent par un refoulement dirlgé essentiellement dans la direction radiale de la matière correspondant à la surdimension, en procédant soit à partir de la zone centrale de chaque fond de dent vers les rayons de base des flancs de dents voisins, soit en partant des zones de rayon de base des flancs de dents voisins vers la zone centrale de chaque fond de dent, et
- ensuite on effectue le lissage de la surface des fonds de dents renforcés à froid.

2. Procédé selon la revendication 1,
**caractérisé en ce que**
le renforcement à froid avec mise en forme de profil de tous les fonds de dents se fait à l'aide d'un outil combiné dont le second segment d'outil a une forme qui soit s'élargit de manière centrée soit a une forme conique à faible pente.

3. Procédé selon l'une quelconque des revendications 1 et 2,
**caractérisé par**
l'application à une denture intérieure d'un accouplement d'arbre fabriqué en un métal léger, notamment en un alliage d'aluminium.
